# EUROPEAN PATENT APPLICATION

(11) **EP 4 782 374 A1**
(43) Date of publication of application: **29.07.2026**
(21) Application number: 25789962.5
(22) Date of filing: 16.04.2025
(51) Int. Cl.: B65G 47/74

(54) **INTEGRATED PACKAGING BOX STORAGE DEVICE**

(30) Priority: 17.04.2024 CN 202410463649
(71) Applicant: Suzhou CAI Machine Group Co., Ltd., Suzhou, Jiangsu 215138 (CN)
(72) Inventor: WANG, Fuzhen, Suzhou, Jiangsu 215138 (CN); XIAO, Zhiguo, Suzhou, Jiangsu 215138 (CN)
(74) Representative: Winter, Brandl - Partnerschaft mbB
(86) International application number: PCT/CN2025/089379
(87) International publication number: WO 2025/218718

(57) **Abstract**

The invention relates to an integrated packaging box storage device which comprises a receiving assembly and a transmission assembly, the receiving assembly includes a material turning unit, a guide rod unit, and a driving unit. The material turning unit includes a circulating line body and bottom trays arranged on the circulating line body at intervals. The boxes are placed between two adjacent bottom trays. The transmission assembly comprises a pallet unit, the receiving assembly is arranged on an upstream side of the pallet unit, and the integrated packaging boxes are stacked at the upstream side of the pallet unit. The driving unit is used for driving the circulating line body so that the integrated packaging boxes between the bottom trays are transported towards the transmission assembly. one by oneThe guide rod unit comprises a guide rod. An avoiding groove is formed in each bottom tray for containing the guide rod that extends towards the transmission assembly. An included angle is formed between an extending direction of the guide rod and a feeding direction of the circulating line body. The integrated packaging boxes are guided by the guide rod to be gradually separated from the bottom tray, and the integrated packaging boxes continuously moving towards the transmission assembly can be stacked together.

## Description

### RELATED APPLICATION

This application claims priority to Chinese issued patent No. 202410463649.0 filed on April 17, 2024 , the entire contents of which are incorporated herein by reference.

### TECHNICAL FIELD

The present disclosure relates to the field of automation, and in particular to an integrated packaging box storage device.

### BACKGROUND

During the dry glue transfer process, due to limitations of the transfer printing technology, the printed products are all discharged individually. To ensure the convenient collection and packaging of the printed products, an existing automated assembly line adds a cover structure according to specific situations to collect the printed products.

With the development of the transfer printing industry, the types of transferred packaging boxes are gradually increasing, especially when printing the integrated packaging boxes in the packaging boxes. An integrated packaging box generally includes a cover body, a skirt edge, and a box body. The integrated packaging boxes are stored in the way of stacking before they are fed to be printed. The stacking method of the integrated packaging boxes is specifically that multiple cover bodies and multiple box bodies are respectively stacked together.

As the depth of the box body is generally much greater than that of the cover body, it is difficult to stack the box bodies with larger depth by inertia or self-weight. To stack the box bodies together, it is necessary to insert the box body into the neighboring box body of the integrated packaging box by an external force, which leads to the need of adding the step of mutual squeezing and stacking during the storage process, increasing the time for storing the integrated packaging boxes. Due to the limitation of storage speed, it is difficult to improve production efficiency.

### SUMMARY

To solve the above technical problems, the present disclosure provides the following technical solutions:

An integrated packaging box storage device, including:
a receiving assembly that includes a material turning unit, a guide rod unit, and a driving unit; the material turning unit including a circulating line body and a number of bottom trays arranged at intervals on the circulating line body; the integrated packaging boxes being placed between two adjacent bottom trays; and
a transmission assembly that includes a pallet unit; the receiving assembly being arranged at an upstream side of the pallet unit, and the integrated packaging boxes being stacked at the upstream side of the pallet unit;
among them, the driving unit is used to drive the circulating line body so that the integrated packaging boxes between the bottom trays are transported in sequence toward the transmission assembly; the guide rod unit includes a guide rod, and an avoidance groove is provided at each bottom tray for accommodating the guide rod, the guide rod extends toward the transmission assembly, and an extension direction of the guide rod is set at an angle to a feeding direction of the circulating line body.

In one embodiment, the circulating line body includes a driving wheel, a driven wheel, and a transmission chain;
the driving wheel is transmission-connected to the driving unit, the driving wheel and the driven wheel are connected by the transmission chain, and the bottom trays are installed on the transmission chain;
driven by the driving unit, a portion of the bottom trays on the transmission chain moves along the feeding direction.

In one embodiment, the guide rod includes an initial section, an arc section, and a lead-out section, which are connected in sequence;
the arc section is arranged parallel to the transmission chain;
an extension direction of the lead-out section is set at an angle to the feeding direction.

In one embodiment, an extension direction of the initial section is perpendicular to an extension direction of the lead-out section.

In one embodiment, a transition section is provided between the arc section and the lead-out section, and the transition section extends in an arc shape.

In one embodiment, a palletizing station and a push-out station are provided on the pallet unit, and the palletizing station is provided near the upstream side of the pallet unit;
the transmission assembly further includes a counting unit and a distribution unit; the counting unit is arranged on the palletizing station, and the distribution unit is located between the palletizing station and the push-out station.

In one embodiment, the counting unit includes a fixed plate, an encoder, a shaft, and a gear; the encoder is mounted on the fixed plate, an end of the shaft is connected to the encoder, and the gear is connected to another end of the shaft;
teeth of the gear are embedded between skirt edges of two stacked integrated packaging boxes, and the stacked integrated packaging boxes move toward the push-out station and drive the gear to rotate.

In one embodiment, the distribution unit includes a screw and a cylinder, the screw drives the cylinder to move along an extension direction of the guide rod, and a power output of the cylinder is capable of extending between two stacked integrated packaging boxes;
the distribution unit is electrically connected to and controlled by the counting unit, two stacked integrated packaging boxes are separated and then driven to be transferred to the push-out station by the distribution unit.

In one embodiment, a pushing assembly is further included, the pushing assembly is arranged on a side of the push-out station;
a pushing direction of the pushing assembly is arranged perpendicularly to an extending direction of the guide rod.

In one embodiment, the angle formed by the extension direction of the guide rod and the feeding direction of the circulating line body is an acute angle.

The present disclosure has at least the following beneficial effects:
In the present disclosure, the extension direction of the guide rod is set at an angle to the feeding direction of the circulation line body, so that the interval between the guide rod and the circulation line body gradually increases, and finally the integrated packaging box located between two adjacent bottom trays will be supported by the guide rod and then escape from the two adjacent bottom trays. At the same time, the integrated packaging boxes located upstream are still restricted by the bottom pallet before it escapes from the bottom pallet, so that the integrated packaging box is pushed by the bottom pallet to continuously move forward along the extension direction of the guide rod, and the upstream integrated packaging boxes pushes the integrated packaging box to escape from the bottom pallet. While pushing the integrated packaging box forward as a whole, the friction resistance generated by the integrated packaging box that escapes from the bottom pallet is used to reduce the interval between the two adjacent integrated packaging boxes that escape from the bottom pallet, thereby realizing the stacking of the cover body and the box body respectively.

Compared with the existing method that requires stacking equipment to apply extrusion force to the integrated packaging boxes to stack two integrated packaging boxes together, the present disclosure automatically achieves palletizing during the circulation process, reducing the palletizing and stacking process, thereby improving production efficiency.

### BRIEF DESCRIPTION OF DRAWINGS

FIG. 1 is a schematic diagram of a three-dimensional structure of an integrated packaging box storage device provided in one embodiment of the present disclosure.
FIG. 2 is a schematic diagram of a partial structure of an integrated packaging box storage device provided in one embodiment of the present disclosure.
FIG. 3 is a partial enlarged schematic diagram of portion A in FIG. 2.
FIG. 4 is a cross-sectional view of the part of the structure of the integrated packaging box storage device in FIG. 2 taken along one side.
FIG. 5 is a schematic diagram of a partial structure of a receiving assembly provided in one embodiment of the present disclosure.
FIG. 6 is a partial enlarged schematic diagram of portion B in FIG. 5.
FIG. 7 is a schematic diagram of a material turning unit and a guide rod unit provided in an embodiment of the present disclosure.

### Reference numerals:

- 1.: Receiving assembly;
- 11.: Material turning unit;
- 12.: Guide rod unit;
- 13.: Guide unit;
- 14.: Drive unit;
- 15.: Side plate;
- 111.: Circulation line body;
- 112.: Bottom tray;
- 1111.: Driving wheel;
- 1112.: Driven wheel;
- 1113.: Transmission chain;
- 1121.: Avoidance groove;
- 1122.: Bottom;
- 1123.: Top;
- 121.: Guide rod;
- 122.: Mounting seat;
- 1211.: Initial section;
- 1212.: Arc section;
- 1213.: Transition section;
- 1214.: Lead-out section;
- 2.: Transmission assembly;
- 21.: Counting unit;
- 22.: Distribution unit;
- 23.: Pallet unit;
- 211.: Fixed plate;
- 212.: Encoder;
- 213.: Shaft;
- 214.: Gear;
- 231.: Palletizing station;
- 232.: Push-out station;
- 3.: Pushing assembly;
- 41.: Integrated packaging box.

### DESCRIPTION OF EMBODIMENTS

To make the above-mentioned objects, features and advantages of the present disclosure more obvious and easier to understand, the specific implementations of the present disclosure are described in detail below with reference to the accompanying drawings. In the following description, numerous specific details are set forth to provide a thorough understanding of the present disclosure. However, the present disclosure can be implemented in many other ways different from those described herein, and those skilled in the art can make similar improvements without violating the connotation of the present disclosure. Therefore, the present disclosure is not limited to the specific embodiments disclosed below.

In the description of the present disclosure, it should be understood that if the terms "length", "width", "thickness", "up", "down", "vertical", "inside", "outside", "clockwise", "counterclockwise", "axial", "radial", "circumferential", etc. appear, the orientation or position relationship indicated by these terms is based on the orientation or position relationship shown in the drawings, which is only for the convenience of describing the present disclosure and simplifying the description, and does not indicate or imply that the device or element referred to must have a specific orientation, be constructed and operated in a specific orientation, and therefore cannot be understood as a limitation on the present disclosure.

In addition, if the terms "first", "second", and "third", etc. appear, these terms are used for descriptive purposes only and cannot be understood as indicating or implying relative importance or implicitly indicating the quantity of the indicated technical features. Therefore, features defined as "first", "second", and "third" may explicitly or implicitly include at least one of these features. In the description of the present disclosure, if the term "plurality", "a number of ", "numerous", etc. appears, they mean at least two, for example, two, three, etc., unless otherwise clearly and specifically defined.

In present disclosure, unless otherwise clearly specified or limited, if the terms "installed", "connected", "connected", "fixed" and the like appear, these terms should be understood in a broad sense. For example, it can be a fixed connection, a detachable connection, or an integrated connection; it can be a mechanical connection or an electrical connection; it can be directly connected or indirectly connected through an intermediate medium; it can be internal communication between two elements or an interaction relationship between two elements, unless otherwise clearly defined. For those skilled in the art, the specific meanings of the above terms in present disclosure can be understood according to specific circumstances.

In the present disclosure, unless otherwise clearly specified and limited, if there is a description that a first feature is "on" or "below" or "above" a second feature, etc., or similar description, it may mean that the first and second features are in direct contact, or the first and second features are in indirect contact through an intermediate medium. Moreover, "on", "above" and "on top of" a first feature may mean that the first feature is directly above or obliquely above the second feature, or simply means that the first feature is at a higher level than the second feature. A first feature being "beneath" or "below" a second feature may mean that the first feature is directly below or diagonally below the second feature, or simply means that the first feature is at a smaller horizontal height than the second feature.

It should be noted that, if an element is referred to as being "fixed on" or "disposed on" or "provided on" another element, it may be directly on the other element or there may be a central element. If an element is considered to be "connected to" another element, it can be directly connected to the other element or there may be intervening elements at the same time. If present, the terms "vertical", "horizontal", "up", "down", "left", "right" and similar expressions used in present disclosure are for illustrative purposes only and do not represent the only implementation method.

The embodiments of the present disclosure are described in detail below with reference to the accompanying drawings.

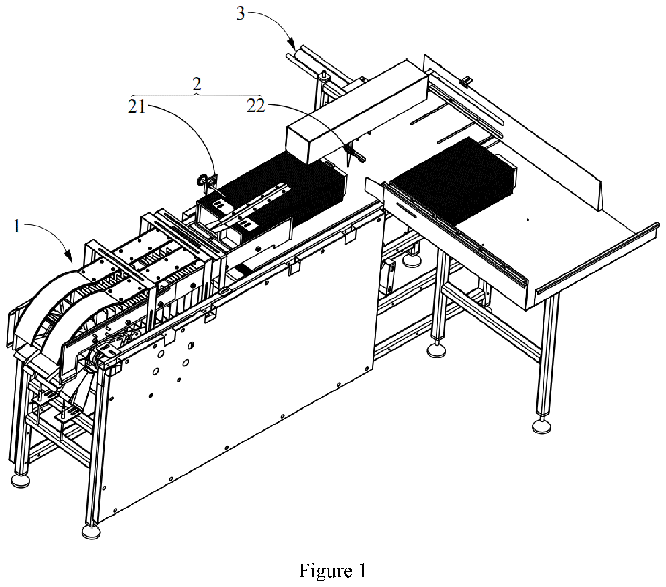

As shown in Figures 1-3, in some embodiments of the present disclosure, an integrated packaging box storage device is provided, which includes a receiving assembly 1, a transmission assembly 2, and a pushing assembly 3. The receiving assembly 1 and the pushing assembly 3 are respectively arranged at two ends of the transmission assembly 2. The receiving assembly 1 is used to transmit the integrated packaging boxes 41 one by one to the transmission assembly 2, and then send a certain number of integrated packaging boxes 41 to the vicinity of the pushing assembly 3. The pushing assembly 3 pushes the certain number of integrated packaging boxes 41 to a fixed position for storage. To facilitate storage, the certain number of integrated packaging boxes 41 are stacked to form a packaging box group. The stacking is specifically provided by stacking the cover body and the box body of the integrated packaging box 41 separately.

In this embodiment, adjacent integrated packaging boxes 41 can be stacked while the receiving component 1 is transferring the integrated packaging boxes 41 in sequence. The transmission assembly 2 includes a pallet unit 23, and the receiving assembly 1 is arranged at upstream side of the pallet unit 23. The integrated packaging boxes 41 are stacked close to the upstream side of the pallet unit 23.

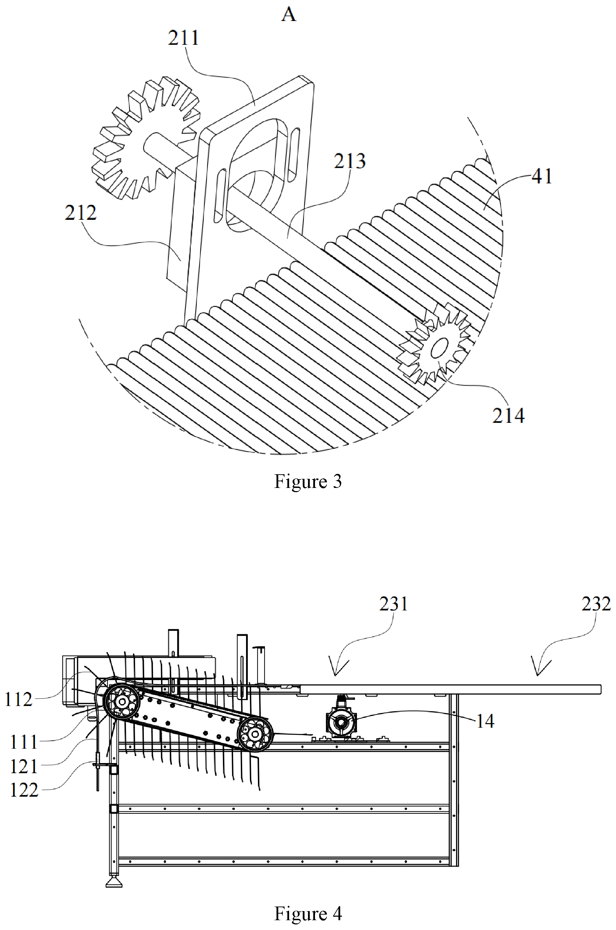

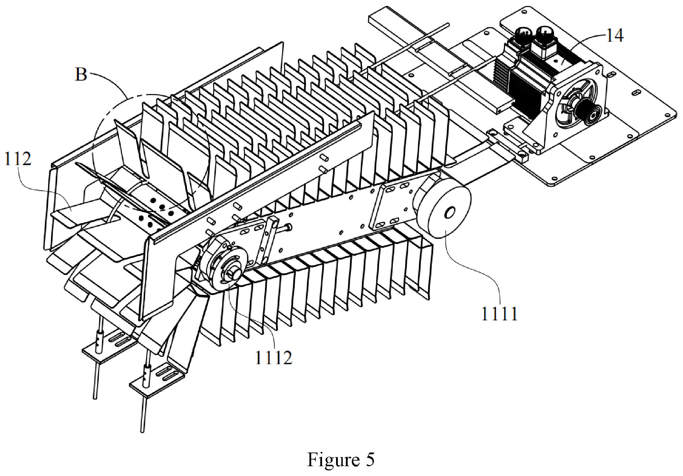

Specifically, further referring to Figures 4 and 5, the receiving assembly 1 includes a material turning unit 11, a guide rod unit 12, and a driving unit 14. The material turning unit 11 includes a circulating line body 111 and a number of bottom trays 112 arranged at intervals on the circulating line body 111. Each of the integrated packaging boxes 41 are placed between two adjacent bottom trays 112. The driving unit 14 is used to drive the circulating line body 111 so that the integrated packaging boxes 41 between the bottom trays 112 are transported one by one toward the transmission assembly 2. Exemplarily, the bottom tray 112 moves toward the transmission assembly 2 along a first straight line direction.

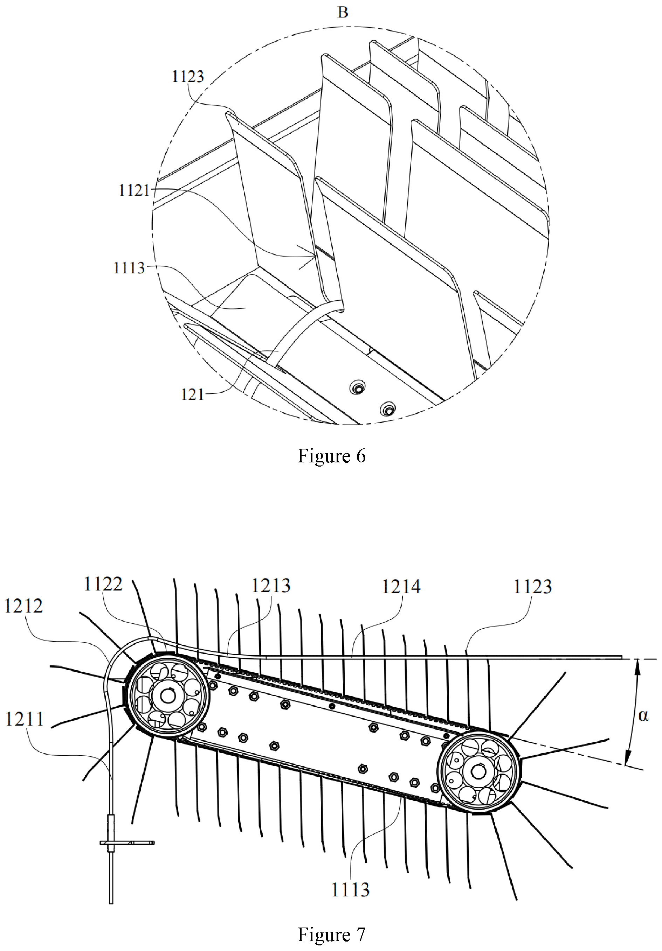

The guide rod unit 12 includes a guide rod 121. As shown in Figures 6 and 7, an avoidance groove 1121 is provided at each bottom tray 112 for accommodating the guide rod 121. The bottom tray 112 has a bottom 1122 and a top 1123 as opposite ends. The circulation line body 111 is provided at the bottom 1122, and the top 1123 is set away from the circulation line body 111. The avoidance groove 1121 penetrates the bottom tray 112 and extends to the top 1123. The guide rod 121 is located in the avoidance grooves 1121.

The guide rod 121 extends toward the transmission assembly 2, and the extension direction of the guide rod 121 is set at an angle to the feeding direction of the circulating line body 111 (i.e., the first straight line direction). Along the extension direction of the guide rod 121, the interval between the guide rod 121 and the circulating line body 111 gradually increases, and at least the guide rod 121 on the side close to the pallet unit 23 is flush with the top 1123 of the bottom tray 112. The integrated packaging box 41 located between the two bottom trays 112 moves with the circulating line body 111 and is also restricted by the guide rod 121, so that the integrated packaging box 41 moves along the extension direction of the guide rod 121, and the position of the integrated packaging box 41 relative to the bottom tray 112 that supports it changes.

In this embodiment, the driving unit 14 drives the circulating line body 111 so that the bottom trays 112 move relative to the guide rod 121, and along the extension direction of the guide rod 121, the interval between the guide rod 121 and the circulating line body 111 gradually increases. During the operation of the circulating line body 111, the closer the bottom tray 112 is to the pallet unit 23, the closer the guide rod 121 is to the top 1123 of the bottom tray 112, that is, the guide rod 121 is in different positions of the avoidance grooves 1121 of on each bottom tray 112. To prevent the guide rod 121 from interfering with the moving bottom tray 112, the avoidance groove 1121 is arranged to penetrate the bottom tray 112 and extend to the top 1123.

Based on the integrated packaging box storage device provided above, when the integrated packaging boxes 41 circulate on the circulating line body 111, the integrated packaging boxes 41 are always located above the guide rod 121. As the integrated packaging boxes 41 gradually approaches the transmission assembly 2, the integrated packaging boxes 41 gradually extend out from the top 1123 of the bottom tray 112, and finally the integrated packaging boxes 41 are completely removed from the area between the bottom trays 112. The integrated packaging box 41 located upstream is still restricted by the bottom tray 112 before it escapes from the bottom tray 112, and the integrated packaging box 41 is pushed by the bottom tray 112 to continuously move forward along the extending direction of the guide rod 121. On the other hand, the integrated packaging box 41 completely removed from the bottom tray 112 is no longer subject to the pushing force of the bottom tray 112, making it difficult to continue to move forward without the action of external force. Since the integrated packaging boxes 41 that have not yet escaped from the bottom tray 112 are continuously moving forward, while the integrated packaging box 41 that has completely escaped from the bottom tray 112 is stationary, the upstream integrated packaging boxes 41 push the integrated packaging box 41 that has escaped from the bottom tray 112 to move forward. While pushing the integrated packaging box 41 forward as a whole, the friction resistance generated when the integrated packaging box 41 that has escaped from the bottom tray 112 moves forward will cause the interval between two adjacent integrated packaging boxes 41 that have escaped from the bottom tray 112 to be reduced, thereby achieving the stacking of the cover body and the box body respectively.

Compared with the existing solution of applying extrusion force to the integrated packaging boxes 41 to stack them together, the present disclosure automatically realizes stacking during the circulation process, reducing the process of applying external force for stacking. The interaction of thrust force and friction force are utilized to realize automatic extrusion stacking of the integrated packaging boxes 41 during their forward movement, thereby improving production efficiency.

Among them, in the above embodiment, an integrated packaging box 41 located upstream is, compared to other integrated packaging boxes 41, the integrated packaging box 41 that is at a position closer to the end of the circulating line body 111 away from the transmission assembly 2. The integrated packaging box 41 located upstream is located between the two bottom trays 112 and is continuously moved forward by the action of the bottom trays 112. The forward direction is the transmission direction of the integrated packaging box 41, specifically, the direction of the circulating line body 111 toward the transmission assembly 2.

Furthermore, the circulating line body 111 includes a driving wheel 1111, a driven wheel 1112 and a transmission chain 1113. In this embodiment, the driving wheel 1111 is in transmission connection with the driving unit 14, the driving wheel 1111 and the driven wheel 1112 are in transmission connection with each other through the transmission chain 1113, and each bottom tray 112 is installed on the transmission chain 1113.

Specifically, the driving wheel 1111 and the driven wheel 1112 are connected through the transmission chain 1113, and the transmission chain 1113 is supported by the tension of the driving wheel 1111 and the driven wheel 1112, so that a part of the transmission chain 1113 is arranged in a straight line. Along the movement direction of the transmission chain 1113, the downstream end of the straight segment of the transmission chain 1113 is arranged close to the transmission assembly 2. Exemplarily, the transmission chain 1113 is a reverse tooth chain, which meshes with the driving wheel 1111 and the driven wheel 1112 for transmission. Since the transmission chain 1113 is a reverse tooth chain, the noise generated by the driving wheel 1111, the driven wheel 1112 and the transmission chain 1113 during operation is reduced. The bottom trays 112 are evenly arranged on the surface opposite to the surface that the teeth of the transmission chain 1113 are arranged. The bottom 1122 of each bottom tray 112 is fixedly connected to the transmission chain 1113 , so that the bottom tray 112 and the transmission chain 1113 are vertically arranged at 90° or approximately 90°.

The interval between two adjacent bottom trays 112 is greater than the depth of the box body of the integrated packaging box 41 and is not greater than the sum of the depths of the box body and the cover body of the integrated packaging box 41. The two adjacent bottom trays 112 limit the closing of the box body and the cover body of the integrated packaging box 41, affecting the stacking effect.

In this embodiment, the extension direction of the guide rod 121 is set at an angle with the straight segment of the transmission chain 1113, and the guide rod 121 is located above this straight segment. Driven by the driving unit 14, the bottom trays 112 on a portion (ie, the straight segment) of the transmission chain 1113 moves along the feeding direction (ie, the first straight direction).

Furthermore, the guide rod 121 includes an initial section 1211, an arc section 1212, and a lead-out section 1214, and the initial section 1211, the arc section 1212, and the lead-out section 1214 are connected in sequence. The arc section 1212 is arranged in parallel with the transmission chain 1113. The extension direction of the Lead-out section 1214 is arranged at an angle with the feeding direction.

Specifically, the arc section 1212 is arranged in parallel with the transmission chain 1113 corresponding to the driven wheel 1112, the arc section 1212 is arranged concentrically with the driven wheel 1112; and the interval distance between the arc section 1212 and the transmission chain 1113 corresponding to the driven wheel 1112 is consistent. The integrated packaging box 41 is fed into the area between the corresponding two bottom trays 112 from the side of the circulating line body 111 close to the driven rotating wheel 1112. The guide rod 121 extends throughout the segment of the transmission chain 1113 where the integrated packaging box 41 passes from entering the circulating line body 111 to flowing out of the circulating line body 111.

The extension direction of the Initial section 1211 is perpendicular to the extension direction of the Lead-out section 1214. The guide rod unit 12 further includes a mounting seat 122, the initial section 1211 passes through the mounting seat 122. The mounting seat 122 is mounted to a bracket of the circulating line body 111 , so that the position of the guide rod 121 is fixed.

More specifically, a transition section 1213 is provided between the arc section 1212 and the lead-out section 1214, and the transition section 1213 extends in an arc shape. The arc section 1212 and the lead-out section 1214 are smoothly transitioned through the transition section 1213, this ensures a stab transformation of the integrated packaging box 41 from the arc section 1212 to the Lead-out section 1214. Exemplarily, both ends of the Transition section 1213 are tangent to the arc section 1212 and the Lead-out section 1214.

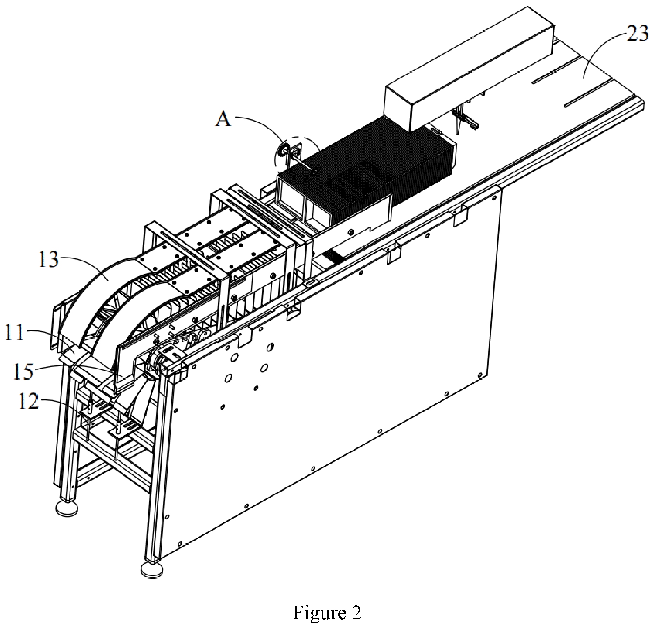

In some embodiments of the present disclosure, as shown in Figures 2 and 7, the receiving assembly 11 also includes a guide unit 13 and two side panels 15. At least a portion of the guide unit 13 is arranged above the bottom trays 112 which are located at the straight segment, and is arranged parallel to the extension direction of the Lead-out section 1214 to limit the position of the integrated packaging boxes 41 in the upper and lower vertical directions. The two side panels 15 are respectively arranged on both sides of the circulation line body 111, so that the side panels 15 are located on both sides of the bottom trays 112 to limit the position of the integrated packaging boxes 41 in the horizontal direction.

Preferably, the guide unit 13 is located above the circulating line body 111. The guide unit 13 includes an arcuate guide segment and a straight guide segment. The arcuate guide segment corresponds to the position of the transmission chain 1113 where the driven wheel 1112 is located, and the straight guide segment corresponds to the position where the straight segment of the transmission chain 1113 is located. In this way, after the integrated packaging boxes 41 are fed into the circulating line body 111, the guide unit 13 limits the vertical position of the integrated packaging boxes 41 to prevent the integrated packaging boxes 41 from being offset in the vertical direction.

Referring to Figures 1 and 4, a palletizing station 231 and a push-out station 232 are provided on the pallet unit 23. The palletizing station 231 is provided close to the upstream side of the pallet unit 23. The transmission assembly 2 further includes: a counting unit 21 and a distribution unit 22. The counting unit 21 is arranged on the palletizing station 231, and the distribution unit 22 is located between the palletizing station 231 and the push-out station 232. The side plate 15 extends into the palletizing station 231, and the counting unit 21 is mounted on the side plate 15. The distribution unit 22 can also be mounted on the side plate 15. It should be understood that the guide unit 13 can also extend to the palletizing station 231, and the counting unit 21 and/or the distribution unit 22 can be mounted on the guide unit 13.

In this embodiment, the counting unit 21 is electrically connected to the distribution unit 22. During the movement of the integrated packaging boxes 41 on the pallet unit 23, the integrated packaging boxes 41 pass through the counting unit 21 in sequence, and the counting unit 21 counts the number of the integrated packaging boxes 41. When the counting unit 21 counts a certain number of integrated packaging boxes 41, the distribution unit 22 separates the stacked integrated packaging boxes 41 and sends the separated certain number of integrated packaging boxes 41 to the push-out station 232 for storage. The counting unit 21 can be selected as an electronic counter or a mechanical counter, wherein the electronic counter can be an infrared counter, through which the integrated packaging boxes 41 pass infrared rays, and each time the infrared rays are blocked is counted as one integrated packaging box 41.

Furthermore, the counting unit 21 can also be a mechanical counter. Specifically, the counting unit 21 includes a fixed plate 211, an encoder 212, a shaft 213, and a gear 214. The encoder 212 is installed on the fixed plate 211. In this embodiment, the fixed plate 211 is fixedly connected to the side plate 15, and the fixed plate 211 extends from the side plate 15. The encoder 212 is installed on the part of the fixed plate 211 extending from the side plate 15. One end of the shaft 213 is connected to the encoder 212, and the gear 214 is connected to the other end of the shaft 213. The teeth of the gear 214 are embedded between the skirt edges of two stacked integrated packaging boxes 41. The stacked integrated packaging boxes 41 move toward the push-out station 232 and drive the gear 214 to rotate. The gear 214 drives the shaft 213 to rotate a certain angle, which is counted as one integrated packaging box 41.

In the above embodiment, while the skirt edges of the integrated packaging box 41 pushes the gear 214 to rotate to realize counting, the integrated packaging box 41 is subjected to the rotational resistance generated by the rotation of the shaft 213 relative to the encoder 212. The friction force formed by the movement of the integrated packaging boxes 41 in the pallet unit 23 and the resistance generated when the counting unit 21 rotate cooperate with the thrust of the bottom tray 112 on the integrated packaging boxes 41 to form two relatively set forces, which squeeze the integrated packaging boxes 41 on the palletizing station 231 and then realize the stacking of the integrated packaging boxes 41, so as to improve the stacking effect between the integrated packaging boxes 41.

Furthermore, the distribution unit 22 includes a screw and a cylinder. The screw drives the cylinder to move along the extension direction of the guide rod 121, and the power output of the cylinder can extend between two stacked integrated packaging boxes 41. The counting unit 21 controls the distribution unit 22. When the counting unit 21 counts a certain number of integrated packaging boxes 41, the distribution unit 22 separates two stacked integrated packaging boxes 41 and drives the separated integrated packaging boxes 41 to be transferred to the push-out station 232.

Specifically, the power output of the cylinder can extend between two stacked integrated packaging boxes 41, and the screw drives the cylinder to move toward the push-out station 232. The power output of the cylinder pushes a certain number of integrated packaging boxes 41 to move to the push-out station 232. The direction of movement of the screw-driven cylinder is consistent with the direction of movement of the integrated packaging box 41 on the palletizing station 231, and the moving speed of the screw-driven cylinder is greater than the moving speed of the integrated packaging boxes 41 on the palletizing station 231, so that the cylinder can drive some of the integrated packaging boxes 41 to separate from the integrated packaging box group that has completed stacking. It is understandable that the power output of the cylinder can also be equipped with a separation device that assists in separating the integrated packaging boxes 41, such as a device that utilizes airflow disturbance to blow air between the two integrated packaging boxes 41 to assist in separating the integrated packaging boxes 41, so as to improve the efficiency of separating the integrated packaging boxes 41.

Furthermore, the pushing assembly 3 is disposed at one side of the push-out station 232, and the pushing assembly 3 is located at one side of the moving direction of the integrated packaging boxes 41 on the pallet unit 23. The pushing direction of the pushing assembly 3 is perpendicular to the extending direction of the guide rod 121 and/or the moving direction of the integrated packaging boxes 41 on the pallet unit 23.

In some embodiments of the present disclosure, the angle formed by the extension direction of the guide rod 121 and the feeding direction of the circulating line body 111 is an acute angle. More specifically, the guide rod 121 extends on the horizontal direction, the feeding direction of the circulating line body 111 is inclined relative to the horizontal direction, and the angle α formed by the extension direction of the flow rod 121 and the feeding direction of the circulating line body 111 is in the range of 15° to 40°, thereby reducing the feeding slope of the circulating line body 111 and increasing the number of integrated packaging boxes 41 restricted by the bottom tray 112. The position of the integrated packaging boxes 41 is adjusted and restricted by the bottom tray 112, the guide unit 13 and the side panel 15, so that the integrated packaging boxes 41 can be aligned for palletizing after it is out of the bottom tray 112.

The above embodiments are used to further illustrate the present disclosure, but the present disclosure is not limited to these specific embodiments. Any modifications, equivalent substitutions and improvements made within the spirit and principles of present disclosure should be understood to be within the scope of protection of present disclosure.

## Claims

1. An integrated packaging box storage device, comprising:
a receiving assembly (1), the receiving assembly (1) comprising a material turning unit (11), a guide rod unit (12), and a driving unit (14); the material turning unit (11) comprising a circulating line body (111) and a plurality of bottom trays (112) arranged at intervals on the circulating line body (111), and integrated packaging boxes (41) being placed between two adjacent bottom trays (112); and
a transmission assembly (2), the transmission assembly (2) comprising a pallet unit (23), the receiving assembly (1) being arranged at an upstream side of the pallet unit (23), and the integrated packaging boxes (41) being stacked at the upstream side of the pallet unit (23); wherein:
the driving unit (14) is configured to drive the circulating line (111) so that the integrated packaging boxes (41) between the bottom trays (112) are transported in sequence toward the transmission assembly (2);
the guide rod unit (12) comprises a guide rod (121), each bottom tray (112) comprises an avoidance groove (1121) for accommodating the guide rod (121); the bottom tray (112) comprises a bottom (1122) and a top (1123) as two opposite ends, the bottom (1122) is mounted on the circulation line body (111), the top (1123) is arranged away from the circulation line body (111), the avoidance groove (1121) penetrates the bottom tray (112) and extends to the top (1123); the guide rod (121) is arranged in the avoidance groove (1121), and the guide rod (121) extends toward the transmission assembly (2);
an extension direction of the guide rod (121) is set at an angle to a feeding direction of the circulating line body (111); along the extension direction of the guide rod (121), a distance between the guide rod (121) and the circulating line body (111) gradually increases, and at least the guide rod (121) on the side close to the pallet unit (23) is flush with the top (1123) of the bottom tray (112), so that the integrated packaging boxes (41) located between the two adjacent bottom trays (112) is supported by the guide rod (121) and then fall out of the two adjacent bottom trays (112).

2. The integrated packaging box storage device according to claim 1, wherein the circulating line (111) comprises a driving wheel (1111), a driven wheel (1112) and a transmission chain (1113); the driving wheel (1111) is transmission-connected to the driving unit (14); the driving wheel (1111) and the driven wheel (1112) are transmission-connected via the transmission chain (1113); and the bottom trays (112) are mounted on the transmission chain (1113); driven by the driving unit (14), a portion of the bottom trays (112) of the transmission chain (1113) moves along the feeding direction.

3. The integrated packaging box storage device according to claim 2, wherein the guide rod (121) comprises an initial section (1211), an arc section (1212), and a lead-out section (1214), which are connected in sequence;
the arc section (1212) is arranged in parallel with the transmission chain (1113);
an extension direction of the lead-out section (1214) is arranged at an angle to the feeding direction.

4. The integrated packaging box storage device according to claim 3, wherein an extension direction of the initial section (1211) is arranged perpendicular to the extension direction of the lead-out section (1214).

5. The integrated packaging box storage device according to claim 3, wherein a transition section (1213) is further provided between the arc section (1212) and the lead-out section (1214), and the transition section (1213) extends in an arc shape.

6. The integrated packaging box storage device according to any one of claims 1 to 5, wherein a palletizing station (231) and a push-out station (232) are provided on the pallet unit (23), and the palletizing station (231) is provided close to the upstream side of the pallet unit (23); the transmission assembly (2) further comprises a counting unit (21) and a distribution unit (22), the counting unit (21) is arranged on the palletizing station (231), and the distribution unit (22) is located between the palletizing station (231) and the push-out station (232).

7. The integrated packaging box storage device according to claim 6, wherein the counting unit (21) comprises a fixed plate (211), an encoder (212), a shaft (213), and a gear (214), the encoder (212) is mounted on the fixed plate (211), an end of the shaft (213) is connected to the encoder (212), and the gear (214) is connected to another end of the shaft (213); teeth of the gear (214) are embedded between the skirt edges of two stacked integrated packaging boxes (41), and the stacked integrated packaging boxes (41) move toward the push-out station (232) and drive the gear (214) to rotate.

8. The integrated packaging box storage device according to claim 6, wherein the distribution unit (22) comprises a screw and a cylinder, the screw drives the cylinder to move along an extension direction of the guide rod (121), and the power output of the cylinder is capable of extending between two stacked integrated packaging boxes (41); the distribution unit (22) is electrically connected to the controlled by the counting unit (21), two stacked integrated packaging boxes (41) are separated and then driven to be transferred to the push-out station (232) by the distribution unit (22).

9. The integrated packaging box storage device according to claim 6 further comprises a pushing assembly (3), wherein the pushing assembly (3) is arranged on a side of the push-out station (232); a pushing direction of the pushing assembly (3) is arranged perpendicular to an extending direction of the guide rod (121).

10. The integrated packaging box storage device according to any one of claims 1 to 5, wherein the angle formed by the extension direction of the guide rod (121) and the feeding direction of the circulating line body (111) is an acute angle.
